# EUROPEAN PATENT SPECIFICATION

(11) **EP 2 931 497 B1**
(45) Date of publication and mention of the grant of the patent: **24.03.2021**
(21) Application number: 13783208.5
(22) Date of filing: 16.10.2013
(51) Int. Cl.: B29C 65/48, B29C 70/08, B29C 65/50, C09J 5/00, B32B 37/04, B29C 70/02, B29L 31/30, B29C 65/18, B29C 65/14

(54) **JOINING COMPOSITE COMPONENTS USING LOW TEMPERATURE THERMOPLASTIC FILM FUSION**
VERBINDEN VON VERBUNDKOMPONENTEN UNTER VERWENDUNG EINER NIEDERTEMPERATURFUSION EINES WÄRMEHÄRTENDEN FILMS
RATTACHEMENT DE COMPOSANTS COMPOSITES À L'AIDE D'UNE FUSION DE FILM THERMOPLASTIQUE BASSE TEMPÉRATURE

(30) Priority: 04.12.2012 US 201213693958
(43) Date of publication of application: 21.10.2015
(73) Proprietor: The Boeing Company, Chicago, IL 60606-1596 (US)
(72) Inventor: WONG, Sharon, Chicago, Illinois 60606 (US); RUBIN, Alexander M., Chicago, Illinois 60606 (US); HEINZ, Stephen R., Chicago, Illinois 60606 (US)
(74) Representative: Howson, Richard Giles Bentham
(86) International application number: PCT/US2013/065238
(87) International publication number: WO 2014/088704

(56) References cited:
- WO-A1-2012/156525
- US-A- 5 643 390
- US-A- 5 667 881
- CAMPBELL F C ED - CAMPBELL FLAKE C: "Manufacturing processes for advanced composites, Chapter 10 (Thermoplastic Composites: An Unfulfilled Promise)", 1 January 2004 (2004-01-01), MANUFACTURING PROCESSES FOR ADVANCED COMPOSITES, ELSEVIER ADVANCED TECHNOLOGY, OXFORD, GB, PAGE(S) 1 - 41, XP002615944, ISBN: 978-1-85617-415-2 page 35 - page 36; figure 28
- MENG HOU: "Thermoplastic Adhesive for Thermosetting Composites", MATERIALS SCIENCE FORUM, vol. 706-709, 1 January 2012 (2012-01-01), pages 2968-2973, XP055153405, DOI: 10.4028/www.scientific.net/MSF.706-709.296 8

## Description

### BACKGROUND INFORMATION

### 1. Field:

The present disclosure generally relates to processes for fabricating composite structures, and deals more particularly with a method of joining composite components using low temperature thermoplastic resin film fusion.

### 2. Background:

A variety of techniques are known for joining composite laminate components such as, without limitation, substructures and stiffeners used in aerospace and other applications. For example, thermoset resin laminates can be joined together by co-curing, adhesive bonding, or mechanical fastening, while thermoplastic resin laminates can be joined together by various forms of welding, melt fusion, adhesive bonding and mechanical fastening. Joining methods using mechanical fasteners may be undesirable in some applications because of their added weight as well as material and installation costs.

Joining thermoplastic resin laminates without mechanical fasteners is particularly challenging. Adhesive bonding of thermoplastics may require extensive surface preparation of bond surfaces using time consuming, advanced processes, such as plasma etching, or labor intensive sanding. Welding techniques require specialized equipment, custom assembly fixtures to maintain component shape, and must be carried out at relatively high temperatures at the bondline, typically above 700°F (371°C), which may result in re-melting of a pre-consolidated component. Re-melting of a component may result in undesirable changes in the shape and/or material properties of the component.

A known process for joining two thermoplastic laminate components, referred to as dual resin bonding, consists of melting layers of PEI (polyetherimide) film that have been pre-consolidated with bond surfaces of the components to be joined. The applications of this process are, however, limited because melting of the PEI films requires heating the films to temperatures greater than 475°F (246°C). Heating pre-consolidated thermoplastic laminate components to these temperatures may cause undesired softening, deformation and/or melting of the components.

Accordingly, there is a need for a method of joining composite components, including thermoplastics and thermosets, which reduces or eliminates the need for extensive surface preparation, and which may be carried out at relatively low temperatures, with cycle times shorter than typical thermoset bonding adhesives. There is also a need for a method of the type mentioned above which allows thermoplastic composite laminates to be joined to components of a dissimilar material, such as thermoset resin laminates, metals, ceramics, and other materials.

WO 2012/156525, in accordance with its abstract, states: a stiffened panel including: a) a laminated skin extending in two directions and consisting of a resin and a continuous fibrous reinforcement; b) a first profiled stiffener consisting of a resin reinforced by a continuous fibrous reinforcement, said first stiffener extending over a first surface of said skin in a first direction; and c) a second profiled stiffener consisting of a resin reinforced by a continuous fibrous reinforcement, said second stiffener extending over a second surface of said skin in a second direction; d) wherein the resins constituting the skin and the stiffeners are thermoplastic and said stiffeners are closely connected to the skin by a weld. Also described is a method for creating such a panel.

In Campbell Flake C "Manufacturing processes for advanced composites, Chapter 10 (Thermoplastic Composites: An Unfulfilled promise)" (1 January 2004, Manufacturing Processes for Advanced Composites, Elsevier Advanced Technology, Oxford, GB, pages 1-41), there is described the potential advantages of thermoplastic composite materials and their processing characteristics, and why thermoplastics failed to replace thermoset composites in the aerospace industry.

US 5,667,881, in accordance with its abstract, states: a pre-preg thermoset sheet, ready to be cured, is molded with a preprocessed thermoplastic part to form an integral thermoset/ thermoplastic composite joint. The method of molding the two parts together comprises: (a) providing a first part comprising the thermoset resin and a second part comprising the thermoplastic resin, both resins being partially miscible in each other; and (b) forming an interface between the first and second parts by bringing the parts into mutual contact and heating the parts at a temperature and pressure for a period of time sufficient to promote mutual miscibility prior to forming a network structure in the thermoset resin. The integral thermoplastic/thermoset composite joint produced is a unique composite joint, produced by interfacing/co-curing two traditionally incompatible materials into a hybrid structural system. The conditions for forming the hybrid structural system derive from the use of thermoplastic materials and thermoset materials that are at least partially miscible in each other at an elevated temperature.

US 5,643,390, in accordance with its abstract, states: a process to promote adhesion between thermoplastic polymers and thermosetting resin adhesives. This is accomplished by selecting a third "interlayer" polymer which is compatible with both the thermoplastic and thermoset polymers. This compatible interlayer is incorporated with the thermoplastic polymer during fabrication to provide the finished part surface with a layer of the compatible film. Upon adhesive bonding, diffusion of the thermosetting adhesive molecules into the compatible film occurs before complete cure, or hardening of the thermosetting adhesive. After completion of cure an Interpenetrating Network (IPN) is formed. Molecular entanglement in this network provides superior adhesive strength enhancement.

In Meng Hou "Thermoplastic Adhesive for Thermosetting Composites" (Materials Science Forum, vol. 706-709, 1 January 2012, pages 2968-2973), there is described a technique of including a thermoplastic film as the outermost layer of thermoset composites, which has been developed in an attempt to join the thermoset composites using fusion bonding methods. Special thermoplastic in the form of a film was incorporated onto the surface of thermoset composites during a co-curing process. A Semi-Interpenetration Polymer Network [s-IPN] was formed between the thermoplastic and thermoset polymers. The thermoset composites can be fusion bonded using co-consolidation and localized heating through their incorporated thermoplastic surfaces. The mechanical properties of thermoset composites bonded with thermoplastic adhesive are equivalent or superior to the benchmark composites bonded with Cytec FM300K adhesive in terms of lap shear strength, high temperature, low temperature and anti-chemical resistance.

### SUMMARY

The disclosed embodiments provide a method of joining composite components into integrated structures using low temperature thermoplastic film fusion. Pre-consolidated thermoplastic composite (TCP) components may be joined together with minimal surface preparation, and at relatively low processing temperatures that are below the melt temperature of the TCP components. Consequently, undesired softening or re-melting of pre-consolidated TCP components is avoided, allowing the original shape and quality of the components to be maintained. The joining method may reduce cycle times, material and labor costs, while eliminating the need for bonding adhesives, peel plies, extensive surface preparation and inspection, specialized processing equipment and/or costly bonding jigs. The joining method may be carried out in an oven or an autoclave using standard techniques used to process thermoset composites, at temperatures less than 500°F (260°C) and at relatively low pressures. Thus, the disclosed method allows a TPC component to be joined to a thermoset composite component at processing temperatures required for curing the thermoset component. In the aircraft industry, for example and without limitation, pre-consolidated thermoplastic substructures and stiffeners can be joined at lower temperatures with thermoplastic and/or thermoset skins without the need to re-melt the thermoplastic components, allowing the original shape and quality of the thermoplastic components to be maintained. The method may also allow joining of TPC components to hybrid laminates, metals, ceramics and other materials. The impact resistance of a thermoset composite structure may be improved by joining thermoset composite components using the disclosed amorphous thermoplastic film the form a fused thermoplastic joint which may absorb energy caused by impacts, shock and/or vibration.

According to one disclosed embodiment, a method is provided of joining two thermoplastic components. The method comprises producing a first thermoplastic composite component by placing a first amorphous thermoplastic film on a first stack of thermoplastic pre-preg, and co-consolidating the first amorphous thermoplastic film and the first stack of thermoplastic pre-preg to provide a layer of the first amorphous thermoplastic film on the first stack of thermoplastic pre-preg, and producing a second thermoplastic composite component by placing a second amorphous thermoplastic film on a second stack of thermoplastic pre-preg, and co-consolidating the second amorphous thermoplastic film and the second stack of thermoplastic pre-preg to provide a layer of the second amorphous thermoplastic film on the second stack of thermoplastic pre-preg. The method further comprises assembling the first and second thermoplastic composite components, including placing the first and second amorphous thermoplastic films against each other, and pressing the first and second amorphous thermoplastic films against each other by applying pressure to the first and second thermoplastic composite components the first and second amorphous thermoplastic films are fused together at a temperature below approximately 475°F (246°C), wherein each of the first and second thermoplastic pre-preg is PEEK and each of the first and second amorphous thermoplastic films is PES.

The features, functions, and advantages can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and advantages thereof, will best be understood by reference to the following detailed description of an illustrative embodiment of the present disclosure when read in conjunction with the accompanying drawings, wherein:
Figure 1 is an illustration of a diagrammatic view of an integrated composite structure having thermoplastic composite components joined together by an amorphous thermoplastic film.
Figure 2 is a drawing of a photomicrograph showing the cross-sectional interface between one of the thermoplastic composite components and an amorphous thermoplastic film forming part of the integrated composite structure shown in Figure 1.
Figure 3 is a drawing of a photomicrograph showing the fused cross-sectional interface between the thermoplastic composite components of the integrated composite structure.
Figures 4-7 are illustrations of cross-sectional, diagrammatic views showing the steps of a method of fabricating the integrated composite structure shown in Figure 1.
Figure 8 is an illustration of a flow diagram of a method of fabricating the integrated composite structure shown in Figure 1.
Figure 9 is an illustration of a cross-sectional view of a pre-consolidated thermoplastic composite hat stringer being placed on a pre-consolidated thermoplastic composite skin.
Figure 10 is an illustration similar to Figure 9 but showing the hat stringer having been placed on the skin and tooling installed for compressing the thermoplastic films together.
Figure 11 is an illustration of a cross-sectional view of pre-consolidated thermoplastic composite I-beams being assembled with two pre-consolidated thermoplastic composite skins.
Figure 12 is an illustration similar to Figure 11, but showing the I-beams and the skins having been assembled, and tooling having been installed.
Figure 13 is an illustration of a diagrammatic view of a composite structure having thermoplastic and thermoset composite components joined together by an amorphous thermoplastic film.
Figure 14 is an illustration of a flow diagram of a method of fabricating the composite structure shown in Figure 13.
Figure 15 is an illustration of a cross-sectional view of an uncured thermoset composite hat stringer being placed on a pre-consolidated thermoplastic composite skin.
Figure 16 is an illustration similar to Figure 15 but showing the hat Stringer having been placed on the skin and tooling installed.
Figure 17 is an illustration of a cross-sectional view of a thermoplastic composite hat stringer being joined to a thermoset composite skin, also showing tooling for maintaining the shape of the skin during curing.
Figure 18 is an illustration of a cross-sectional view of pre-consolidated thermoplastic composite I-beams being joined to two uncured thermoset composite skins.
Figure 19 is an illustration of a diagrammatic view of a composite structure having a thermoplastic composite component and a non-thermoplastic component joined together by an amorphous thermoplastic film.
Figure 20 is an illustration of a flow diagram of a method of fabricating the composite structure shown in Figure 19.
Figure 21 is illustration of a diagrammatic view of a composite structure having two thermoset composite components joined together by an amorphous thermoplastic film.
Figure 22 is an illustration of a flow diagram of a method of fabricating the composite structure shown in Figure 21.
FIG. 23 is an illustration of a flow diagram of aircraft production and service methodology.
FIG. 24 is illustration of a block diagram of an aircraft.

### DETAILED DESCRIPTION

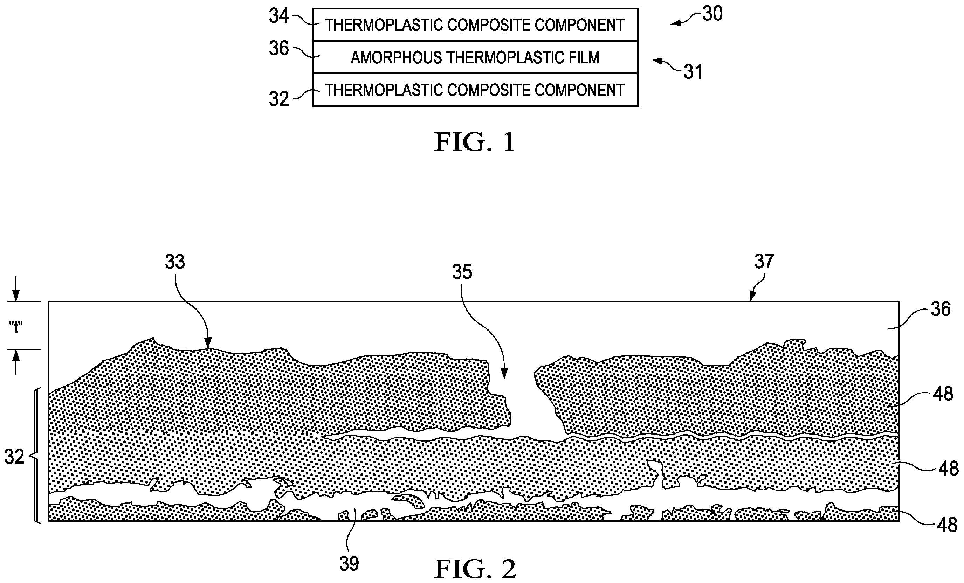

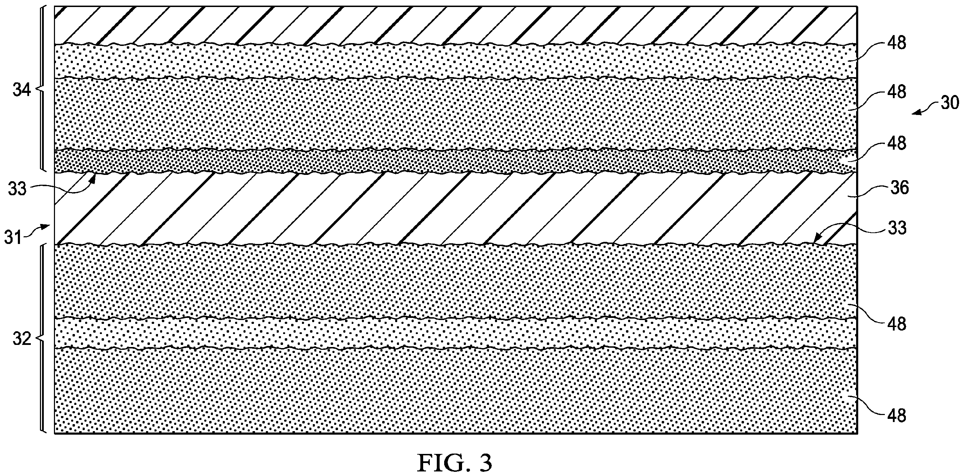

The disclosed embodiments provide a method of joining a thermoplastic composite (TPC) component to another component using a film fusion process that may be carried out at relatively low processing temperatures with minimal surface preparation. For example, referring to Figures 1-3, according to one example, an integrated TPC structure 30 comprises first and second TPC components 32, 34 respectively, are joined together by a fused thermoplastic joint 31. The thermoplastic joint 31 is formed by an amorphous thermoplastic film 36 that effectively fuses the first and second TPC components 32, 34 together at a processing temperature that is below the melting point of either of the TPC components 32, 34. As best seen in Figure 3, each of the first and second TPC components 32, 34 comprises a consolidated thermoplastic composite laminate in which layers of fiber reinforcement 48 are held in a thermoplastic resin matrix 39 (Figure 2). The fiber reinforcement 48 may comprise unidirectional or bidirectional fibers, such as without limitation, glass or carbon fibers, arranged in desired fiber orientations according to a predefined ply schedule (not shown). As will be discussed below in more detail, each of the TPC components 32, 34 may be formed from a stack of a suitable thermoplastic pre-preg which is co-consolidated with a layer of the amorphous thermoplastic film 36.

Thermoplastic polymers may be amorphous or semi-crystalline. Amorphous thermoplastic polymers are substantially lacking in positional order on the molecular scale, whereas semi-crystalline thermoplastic polymers may contain both crystalline and amorphous regions. The degree of crystallinity of a thermoplastic polymer is affected by structure, temperature, molecular weight, stereochemistry and processing conditions. Semi-crystalline thermoplastic polymers have melt temperatures Tm at which the ordered regions of molecules break-up and become disordered. In contrast, in amorphous thermoplastic polymers, amorphous regions of the molecules soften over a relatively wide temperature range which is below the melt temperature Tm, referred to as the glass transition temperature Tg. Thermoplastic polymers that are fully amorphous do not melt, and therefore do not have a melt temperature Tm. However, all thermoplastic polymers exhibit a glass transition temperature Tg. According to the disclosed examples, the resin matrix 39 (Figure 2) may be a semi-crystalline thermoplastic polymer, such as, without limitation, members of the polyaryletherketone (PAEK) family including but not limited to polyetheretherketone ("PEEK") and polyetherketoneketone ("PEKK"), and polyphenylsulfone ("PPS"), to name only a few. The resin matrix 39, including the semi-crystalline thermoplastic polymers mentioned immediately above, may have a melt temperature Tm which is above approximately 500°F (260°C), typically above 650°F (343°C).

The amorphous thermoplastic film 36 is an amorphous polymer that may have a glass transition temperature Tg above approximately 140°C and below approximately 500°F (260°C), and other mechanical, thermal and physical properties that are suitable for the application. The particular polymer selected for use as the amorphous thermoplastic film 36 should be compatible with the semi-crystalline thermoplastic polymer resin matrix 39, and should be stable at temperatures that are typically used to process thermoplastic parts, for example and without limitation from approximately 650°F (343°C) to approximately 800°F (426°C). In one example, an amorphous thermoplastic film 36 may be employed that exhibits properties allowing it to be co-consolidated with a joining surface of each of the TPC components 32, 34. The amorphous thermoplastic film 36 is co-consolidated with a joining surface of each of the TPC components 32, 34, at or above the temperature required for consolidation, i.e. the melt temperature Tm of the TPC component, which typically may be in the range of between from approximately 650°F (343°C) to 800°F (426°C), in order to prepare the TPC component 32, 34 for a secondary joining process, discussed below. The amorphous thermoplastic film 36 exhibits properties that allow the TPC components 32, 34 to be joined together by fusing the two amorphous thermoplastic films 36 together at temperatures below approximately 500°F (260°C), thus avoiding the need to re-melt either of the TPC components 32, 34 during the joining process. By avoiding the need to re-melt the TPC components 32, 34 during the joining process, the shape and quality of the TPC components 32, 34 may be maintained.

In still another example, discussed later in more detail, an amorphous thermoplastic film 36 may be used that exhibits properties allowing it to join a TPC substrate to a surface of an uncured thermoset pre-preg (not shown), or to a layer of epoxy film adhesive (not shown) on a thermoset pre-preg of a desired shape. The thermoplastic film 36 joins the TPC substrate to the uncured thermoset pre-preg or to the layer of epoxy film adhesive, at the cure temperature of the thermoset pre-preg or of the epoxy film adhesive, which may be, for example and without limitation, approximately 350°F (176°C). The amorphous thermoplastic film 36 may comprise a tough, rigid, relatively high temperature engineered material, such as, without limitation a suitable grade of PES (polyethersulfone), having good thermal stability and creep performance. The amorphous thermoplastic film 36 also has the ability to withstand loads at temperatures up to 180°C for long periods of time, and the ability to retain mechanical properties up to 210°C.

Referring now concurrently to Figures 1-3, each of the TPC components 32, 34 comprises a consolidated stack of TPC pre-preg formed by reinforcement layers 48 held in a semi-crystalline thermoplastic matrix 39. Each of the TPC components 32, 34 includes a face 33 covered by, and pre-consolidated with an amorphous thermoplastic film 36 that forms a joining surface 37 (Figure 2). The amorphous thermoplastic film 36 may comprise one or more layers of amorphous thermoplastic material that are consolidated together to form a desired thickness "t" suitable for the particular application. In one application, for example and without limitation, the thickness "t" may be between approximately 5 mm and 7 mm.

Each of the TPC component faces 33 is thus rich with amorphous thermoplastic resin which may fill any cracks, openings or voids 35 in the face 33. The amorphous thermoplastic films 36 that are pre-consolidated with the faces 33 of the TPC components 32, 34 may be of the type described previously. When the joining surfaces 37 (Figure 2) of the TPC components 32, 34 are assembled and pressed together face-to-face, and the amorphous thermoplastic films 36 are fused together as shown in Figure 3, a fused thermoplastic joint 31 is formed which joins the TPC components 32, 34.

As will be explained below, the amorphous thermoplastic films 36 are respectively consolidated with the corresponding TPC component 32, 34 at the melt temperature Tm of the semi-crystalline resin 39 during the pre-consolidation process. However the pre-consolidated TPC components 32, 34 are subsequently joined together by heating the TPC structure 30 to a temperature which is above the glass transition temperature Tg of the amorphous thermoplastic film 36, but is substantially below the melt temperature Tm of the semi-crystalline thermoplastic resin39. Additional layers (not shown) of the amorphous thermoplastic film 36 may be placed between the joining surfaces 37 when the TPC components 32, 34 are assembled in order to account for manufacturing and/or assembly tolerances. These additional layers of film 36 will fuse with the film layers that have been pre-consolidated with the TCP components 32, 34.

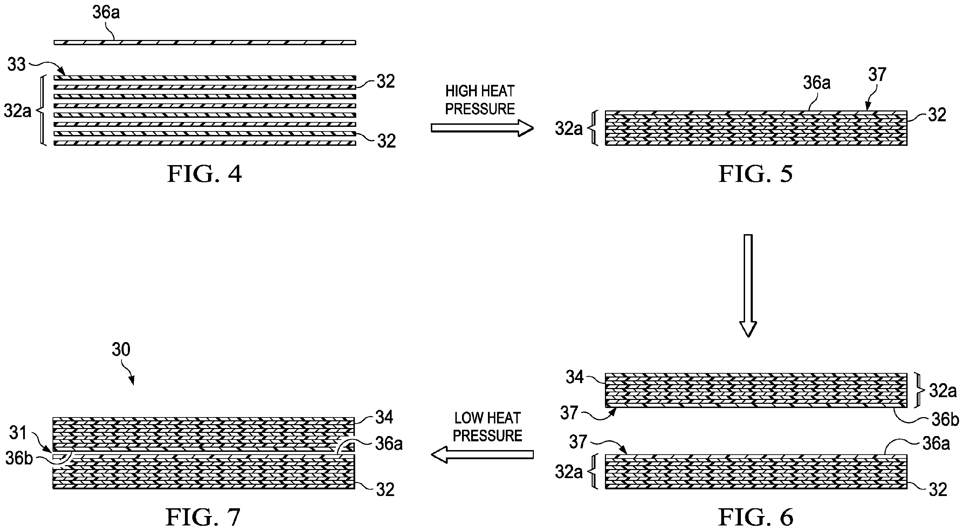

Attention is now directed to Figures 4-7 which graphically illustrate fabrication of an integrated TPC structure 30 (Figure 1) which requires minimal surface preparation and which may be performed using conventional ovens, vacuum bagging and/or autoclave processing. As shown in Figure 4, a stack 32a of semi-crystalline TPC pre-preg is assembled, following which an amorphous thermoplastic film 36a is placed on a face 33 of the stack 32a. The assembled stack 32a of TPC pre-preg and the film 36a are heated to at least the melt temperature of the TPC pre-preg, while being subjected to a consolidating pressure, using conventional techniques such as autoclave processing or vacuum bag processing within an oven. Heating the TPC pre-preg to its melt temperature also softens the amorphous thermoplastic film 36a, and the applied pressure results in the assembled stack 32a of TPC pre-preg and the film 36 a being consolidated together, as shown in Figure 5. The second TPC component 34 is assembled and pre-consolidated in the same manner as the first TPC component 32 described immediately above.

Each of the TPC components 32, 34 having been pre-consolidated as described above, the TPC components 32, 34 are assembled, as shown in Figure 6 by placing the joining surfaces 37 formed by the amorphous thermoplastic films 36a, 36b on the components 32, 34 in face-to-face contact with each other. With the two TPC components 32, 34 having been assembled together, they are then heated and subjected to a consolidating pressure as shown in Figure 7. The two TPC components 32, 34 are heated to a temperature that is at least the glass transition temperature Tg of the films 36a, 36b, but which is substantially below the melt temperature Tm of the semi-crystalline TPC. For example, the two TPC components 32, 34 may be heated to a temperature that is between approximately 418°F (214°C) and approximately 500°F (260°C) where the glass transition temperature Tg of the film 36a, 36b is around 418°F (214°C). The joining process described in connection with Figures 4-7 may be carried out using only the tooling required to apply the necessary consolidation pressure, since the two TPC components 32, 34 are pre-consolidated and only enough pressure is needed to compress and consolidate the two amorphous thermoplastic films 36a, 36b.

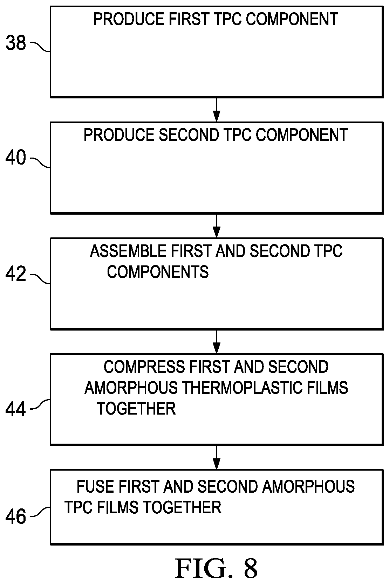

Figure 8 illustrates the overall steps of a method of joining first and second TPC components 32, 34 together. Beginning at step 38, a first TPC component 32 is produced which, as previously described, comprises co-consolidating an amorphous thermoplastic film 36a with a first stack 32a of semi-crystalline TPC pre-preg. At step 40, a second TPC component 34 is produced, which comprises co-consolidating a second amorphous thermoplastic film 36b with a second stack 32b of semi-crystalline TPC pre-preg. At step 42, the first and second TPC components 32, 34 are assembled by placing the joining surfaces 37 of the films 36a, 36b together, in face-to-face contact. Although not shown in Figure 8, additional layers of amorphous thermoplastic film 36 may be co-consolidated with either or both of the joining surfaces 37 it steps 38, 40 to account for assembly tolerances. Then, at 44, amorphous thermoplastic films are compressed together by applying pressure to the first and second TPC components 32, 34. Finally, at step 46, the amorphous thermoplastic films 36a, 36b are fused together by heating the films 36a, 36b to a temperature above their glass transition temperatures Tg but below a temperature of approximately 500°F (260°C).

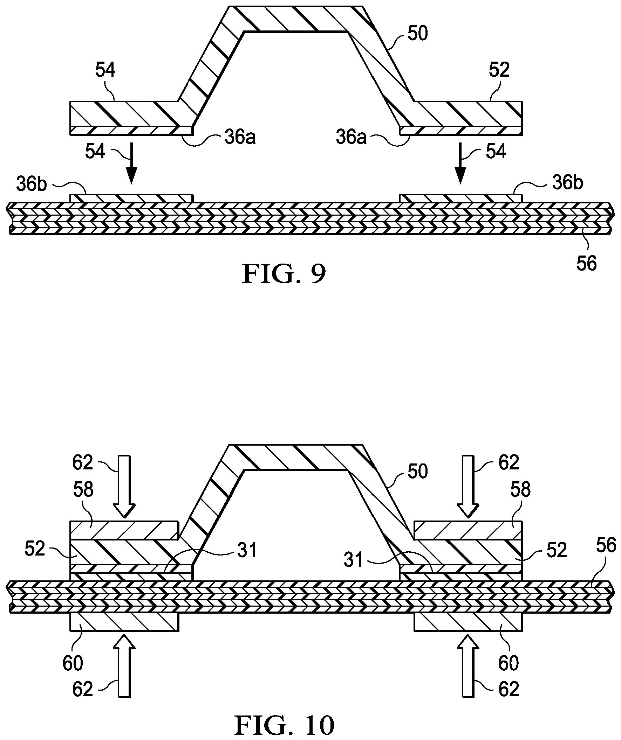

Attention is now directed to Figures 9 and 10 which show one typical application of the disclosed method of joining two semi-crystalline TPC components using an amorphous thermoplastic film of the type previously described. In this example, the two semi-crystalline TPC components respectively comprise a hat shaped TCP stringer 50, and a TCP skin 56. In the illustrated example, the Stringer 50 and the skin 56 are substantially straight, however in other examples the may have one or more curves or contours, depending upon the application. The stringer 50 includes a pair of laterally extending flanges 52, 54 to which the amorphous thermoplastic film 36a has been pre-consolidated in a fabrication process similar to that previously described in connection with Figures 4-8. Similarly, a pair of spaced apart amorphous thermoplastic films 36b is pre-consolidated with the skin 56, in alignment with the flanges 52, 54.

The stringer 50 and the skin 56 having each been pre-consolidated with their respective films 36a, 36b, the stringer 50 is then placed 54 on the skin 56, such that the amorphous thermoplastic films 36a, 36b are aligned and brought into face-to-face contact with each other.

Referring particularly to Figure 10, simple upper and lower tools 58, 60 are respectively placed on the flanges 52, 54 and the bottom of the skin 56 in preparation for carrying out a secondary joining process in which stringer 50 is joined to the skin 56 by fusing the films 36a, 36b together. It should be observed here that the upper and lower tools 58, 60 need only contact the flanges 52, 54 and the skin 56 in the areas where the amorphous thermoplastic films 36a, 36b are located.

The films 36a, 36b are heated to a temperature below approximately 500°F (260°C), but at least to their glass transition temperature Tg, which is below the melt temperature Tm of the fully consolidated, semi-crystalline TPC stringer 50 and skin 56. This heating may be achieved by placing the assembled stringer 50 and skin 56 in an autoclave or an oven, although it may be possible to apply localized heat in the area of the films 36a, 36b using infrared heating, heated tooling or other techniques. The upper and lower tools 58, 60 are forced together by consolidation pressure 62 applied by any suitable means in order to compress the films 36a, 36b together and thereby fusing them as they are heated above their glass transition temperature Tg. The necessary consolidation pressure 62 may be applied to the tool 58, 60 using mechanical means such as a press (not shown), or vacuum bagging and/or autoclave pressure. A relatively low level of pressure, for example, equal to or less than approximately 100 psi (689 kPa) may be required to consolidate the two films 36a, 36b together.

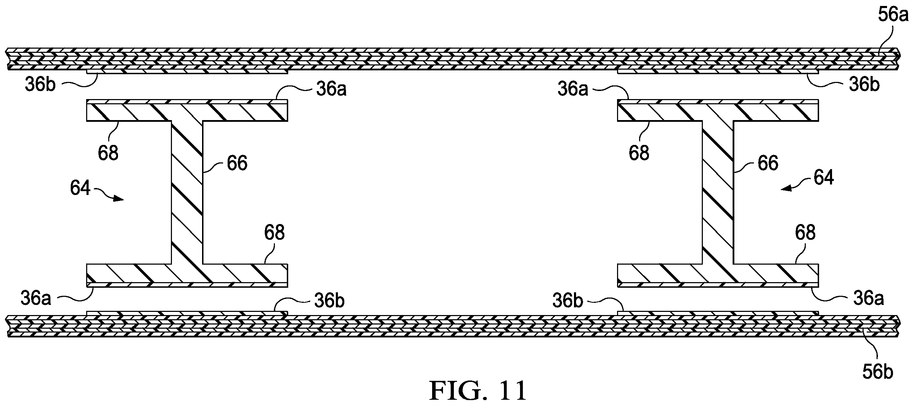

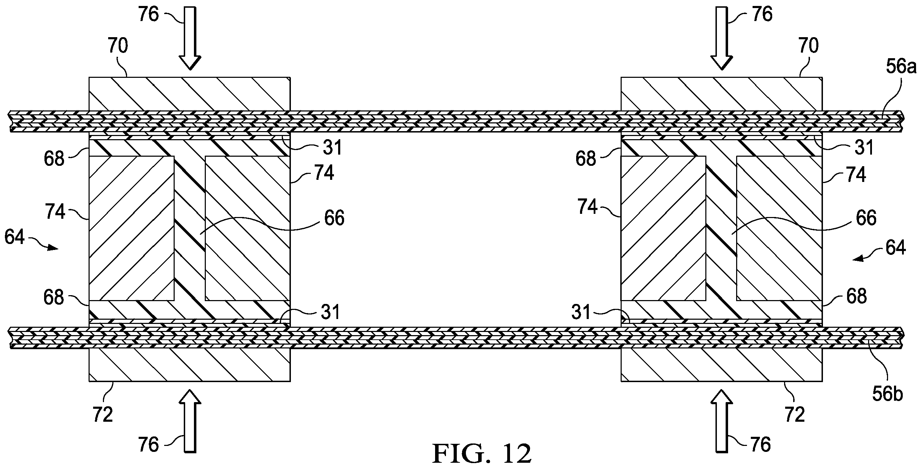

Figures 11 and 12 illustrate another application of the method of joining fully consolidated semi-crystalline TPC I-beams 64 with two semi-crystalline TPC skins 56a, 56b. Each of the I-beams 64 includes a pair of spaced apart flanges or caps 68 connected by a central web 66. As best seen in Figure 11, the I-beams 64 and the skins 56a, 56b are prefabricated and then joined together in a secondary joining operation at relatively low processing temperatures and pressure according to the disclosed method. Each of the I-beams 64 is prefabricated by laying up and forming TPC pre-preg, following which amorphous thermoplastic film 36a is placed over each of the caps 68. The films 36a are then co-consolidated with the beams 64 as previously described in which TPC I-beam layups are heated to their melt temperature, typically around 650°F (343°C) or higher, and consolidation pressure is applied through suitable tooling (not shown) in order to consolidate the TPC layups along with the amorphous thermoplastic films 36a. The semi-crystalline TPC skins 56a, 56b are fabricated in a similar manner. The skins 56a, 56b are laid up using stacks of TPC pre-preg, and amorphous thermoplastic film 36b is applied to the skin 56a, 56b at locations where the beams and 64 are to be joined to the skins 56a, 56b. The skins 56a, 56b and the films 36b are then co-consolidated by heating the TPC pre-preg layups and the films 36b to the melt temperature of the TPC pre-preg being subjected to consolidation pressure using any suitable means. It should be noted here that while the I-beams 64 are shown as being joined to a pair of skins 56a, 56b, in other examples, the I-beams 64 may be joined to only a single skin 56. Moreover, caps, flanges or other surfaces of composite beams having other cross-sectional shapes may be joined to one or more composite skins using the disclosed method and the amorphous thermoplastic film 36.

Referring particularly to Figure 12, similar to the application shown in Figures 9 and 10, the I-beams 64 may be joined to the skins 56a, 56b, using relatively simple upper and lower tools 70, 72 to apply consolidating pressure 76 to the assembled I-beams 64 and skins 56a, 56b. The consolidation pressure 76 may be applied to the tools 70, 72 using mechanical means such as a press (not shown), vacuum bagging and/or autoclave processing. The necessary heating may be achieved using the local application of heat, or within an oven or an autoclave. Since the I-beams 64 and the skins 56a, 56b are pre-consolidated, only enough applied pressure is required to effect consolidation of the semi-crystalline thermoplastic films 36a, 36b, for example equal to or less than approximately 100 psi (689 kPa). Similarly, since the I-beams 64 and the skins 56a, 56b have been pre-consolidated, is not necessary to re-heat the consolidated semi-crystalline TPC to its melt temperature, but rather it is only necessary to heat the films 36a, 36b to their glass transition temperature which is below approximately 475°F (246°C). Further, since both the I-beams 64 and the skins 56a, 56b are pre-consolidated, costly and/or complicated tooling is not required to form or consolidate either the I-beams 64, or the skins 56a, 56b. Optionally, it may be desirable to provide side tools 74 on each side of the webs 66 in order to avoid undesired deformation of the webs 66 and/or to more effectively transfer the applied loads through the I-beams 64 to the interface between the films 36a, 36b.

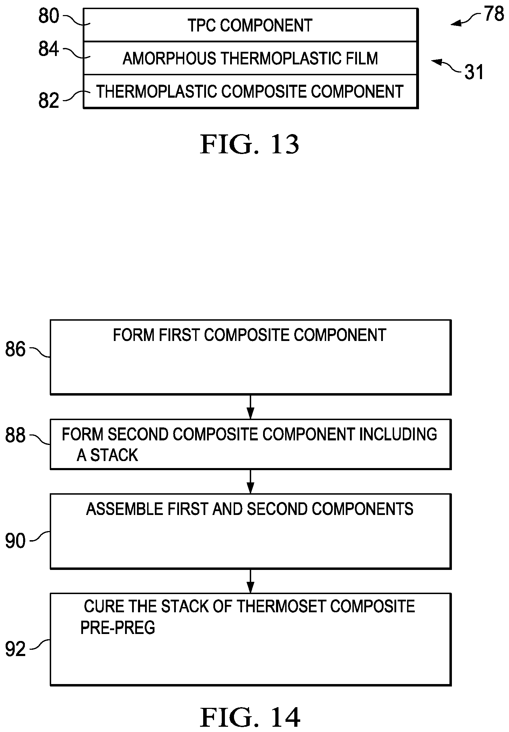

Referring now to Figure 13, the disclosed joining method employing an amorphous thermoplastic film 84 may be used to fabricate a composite structure 78 by joining a semi-crystalline TPC component 80 to a thermoset composite component 82 at the cure temperature of the thermoset composite component 82. Typically, the temperature at which the thermoset composite component 82 cures is below the glass transition temperature Tg of the semi-crystalline TPC component 80, typically less than approximately 400°F (204°C). The amorphous thermoplastic film 84 remains glassy at the cure temperature of the semi-crystalline TPC component 80. The resin forming the matrix of the semi-crystalline TPC component 80 reaches a minimum viscosity during cure, and has excellent affinity toward the amorphous thermoplastic film 84. Due to this affinity, the thermoset resin wets the surface of the amorphous thermoplastic film 84. Upon cure, a strong bond is obtained between the amorphous thermoplastic film 84 and the thermoset resin of the semi-crystalline TPC component 80, producing a fused thermoplastic joint 31 between the semi-crystalline TPC component 82 the thermoset component 82. In some examples, some distribution of the thermoset resin into the amorphous thermoplastic film 84 may occur, which may strengthen the bond.

Figure 14 illustrates the overall steps of a method of joining the TPC component 80 with the thermoset component 82. Beginning at step 86, a first composite component 80 is formed of by co-consolidating an amorphous thermoplastic film 36 and a stack of TPC pre-preg. At step 88, a second composite component 82 is formed by, for example, laying up a stack of thermoset composite pre-preg. The thermoset composite pre-preg may comprise, for example and without limitation a thermoset resin such as epoxy that is reinforced with unidirectional or bidirectional fibers such as carbon fibers, however other thermoset resins and fiber materials are possible. Typically, the thermoset resin may have a cure temperature below approximately 400° F (204°C), for example approximately 350°F (176°C).

At step 90, the first and second composite components 80, 82 are assembled by placing the amorphous thermoplastic film 36 of the TPC component 80 against the stack of thermoset composite pre-preg. Although not shown in Figure 14, an additional layer of the amorphous thermoplastic film 36 optionally may be placed on the stack of the thermoset composite pre-preg. This additional layer of the film 36 later fuses together with the film 36 that has been previously co-consolidated with the stack of TPC pre-preg. The additional layer of the film 36 may be used to compensate for manufacturing and/or assembling tolerances and/or mismatch of problems occurring during consolidation, thereby assuring that the fused thermoplastic joint 31 is continuous and has a preselected thickness throughout. At step 92 the stack of thermoset composite pre-preg is cured by heating the thermoset pre-preg along with the TPC component 82 to the cure temperature of the thermoset resin. At this cure temperature, the affinity of the thermoset resin toward the glassy amorphous thermoplastic film 36 results in forming a fused thermoplastic joint 31 being formed between the TPC component 80 and the cured thermoset composite component 82. Thus, it may be appreciated that during curing of the thermoset composite pre-preg in step 92, the pre-consolidated TPC component 80 does not re-melt since the cure temperature of the thermoset resin is less than the melt temperature Tm of the TPC component 80.

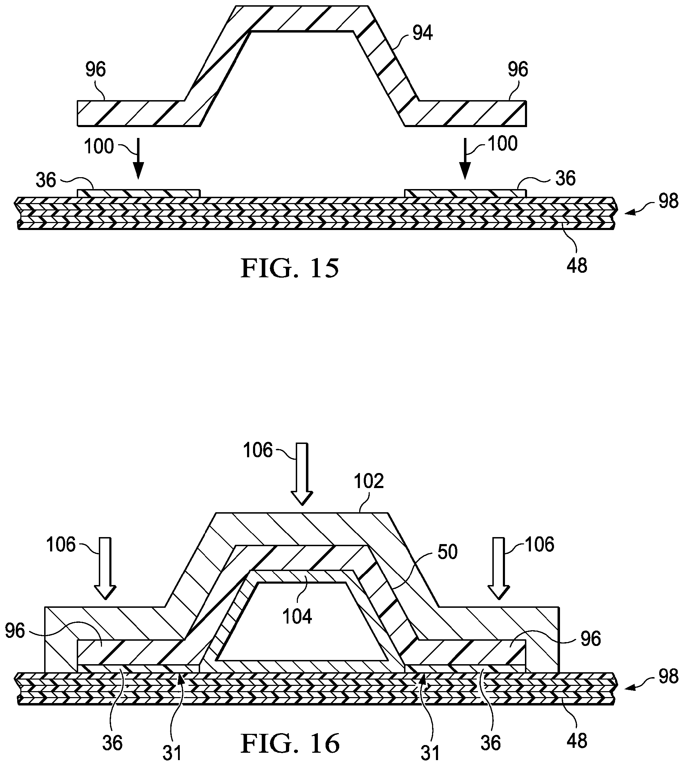

Figures 15 and 16 illustrate one application of the method of joining a pre-consolidated TPC component to a thermoset composite component using a fused thermoplastic joint 31 that is formed during curing of the thermoset composite component as previously described in connection with Figures 13 and 14. In this example, a hat stringer 94 formed of a thermoset composite such as, without limitation, carbon fiber epoxy, is joined to a pre-consolidated TPC skin 98 comprising a pre-consolidated stack 48 of TPC pre-preg. The hat stringer 94 includes laterally extending flanges 96. An amorphous thermoplastic film 36 is co-consolidated on the surface of the skin 98 at locations corresponding to the placement of the flanges 96 on the skin 98. The amorphous thermoplastic film 36 may be of the type previously described and is chosen to suit the cure temperature of the thermoset composite used to fabricate the stringer 94. The thermoset composite hat stringer 94 may comprise a multi-ply stack of fiber reinforced thermoset resin that is laid up and formed to the desired shape of the hat stringer 94. The uncured hat stringer 94 is then placed 100 on the pre-consolidated TPC skin 98, with the flanges 96 in face-to-face contact with the film 36.

Referring now particularly to Figure 16, a tool 102 having a cavity matched to the outer mold line of the stringer 94 is placed over the stringer 94, and a removable mandrel 104 may be placed within the stringer 94 in order to react consolidation force 106 applied to the hat stringer 94 during the curing process. The tool 102 along with the mandrel 104 assists in maintaining the shape of the hat stringer 94 during curing. The assembly of the hat stringer 94 and the skin 98 are subjected to a combination of heat and pressure using conventional autoclave or out-ofautoclave processing techniques. During curing, thermoset stringer 94 is heated to which cure temperature of the thermoset resin, which may be approximately 350°F (176°C). During curing, the cure temperature is sufficient to cause the amorphous thermoplastic film 36 to become glassy and fuse with the viscous thermoset resin, thereby forming a fused thermoplastic joint 31 between the stringer 94 and the skin 98. During the cure process, the TPC skin 98 maintains its shape and does not de-laminate or loose desirable qualities as it is not re-melt at the relatively low temperatures required for curing of the thermoset stringer 94.

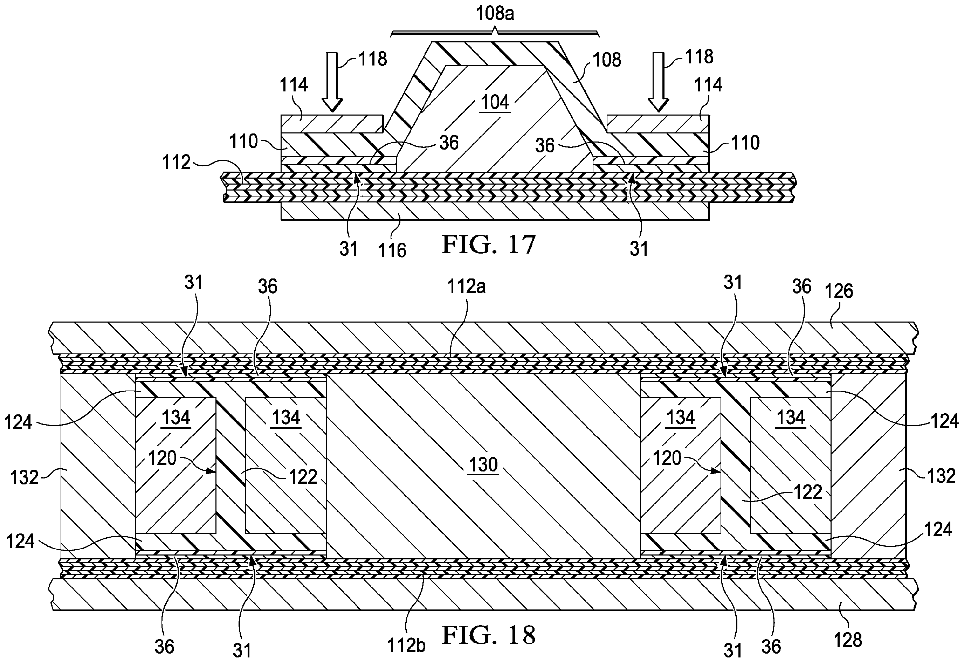

Figure 17 illustrates still another application of the disclosed joining method using an amorphous thermoplastic film 36 to form a fused thermoplastic joint 31 between two composite components. In this example, a pre-consolidated TPC laminate hat stringer 108 is joined by the film 36 to a thermoset composite laminate skin 112. Simple upper tools 114 are used to apply pressure 118 to flanges 110 of the stringer 108 in order to force film 36 pre-consolidated on the flanges 110 against the thermoset composite skin 112 during curing. A lower tool 116 may be employed to maintain the shape of the thermoset composite skin 112 during the cure process. Also, an internal, mandrel-like tool 104 may be placed inside of the stringer 108, bearing on the thermoset composite skin 112, in order to transmit consolidation pressure to the skin 112 beneath the hat portion 108a of the stringer 108 during consolidation and curing. During curing, the thermoset composite skin 112 is heated to its cure temperature, typically approximately 350°F (176°C), which is sufficient to cause the film 36 to become glassy and fuse with the viscous thermoset resin of the skin 112, thereby forming a strong, robust fused thermoplastic joint 31.

Figure 18 illustrates another application of the disclosed method in which the TCP I-beams 120 are joined to thermoset composite skins 112a, 112b using the previously described amorphous thermoplastic film 36. This application is similar to that previously described in connection with Figures 11 and 12. However in this example, additional tools may be used to maintain the shape of the skins 112a, 112b the during the cure process in which the thermoset resin of the skins 112a, 112b becomes viscous and fuses with the glassy amorphous thermoplastic film 36. The additional tooling comprises upper and lower tools 126, 128, a center tool 130 and outer tools 132 which collectively engage and contain the surfaces of the skins 112a, 112b. Side tools 134 may also be positioned on opposite sides of the webs 122 in order to avoid undesired deformation of the webs 122, and to assist in distributing consolidation force applied to the amorphous thermoplastic film 36 during curing.

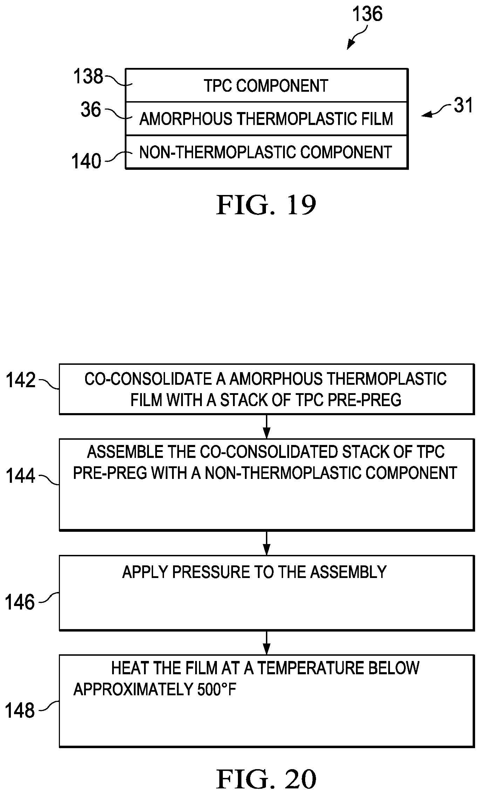

While the applications previously described involved joining a TCP component to a thermoset composite component, it may be possible to employ the disclosed method to join a TPC component to a component formed of other materials such as, without limitation, metals and ceramics. Thus, referring to Figure 19, the previously described amorphous thermoplastic film 36 may be employed to fabricate a composite structure 136 that includes forming a fused thermoplastic joint 31 between a TCP component 138 and a component 140 formed of a non-thermoplastic material such as, without limitation, a metal or a ceramic.

Beginning at step 142, amorphous thermoplastic film 36 is co-consolidated with a stack of semi-crystalline TPC pre-preg. At 144, the co-consolidated TPC pre-preg and film 36 are assembled with a non-thermoplastic component 140, by placing the co-consolidated amorphous thermoplastic film 36 against the non-thermoplastic component 140. At step 146, pressure is applied to the assembly of the co-consolidated TPC stack/film and the non-thermoplastic component 140 in order to press the film 36 against the non-thermoplastic component 140. At step 148, the amorphous a plastic film 36 is heated to a temperature below approximately 500°F but at least to its glass transition temperature, causing it to flow. The flowing film 36 forms a fused thermoplastic joint 31 between the pre-consolidated TCP component 138 and the non-thermoplastic component 140.

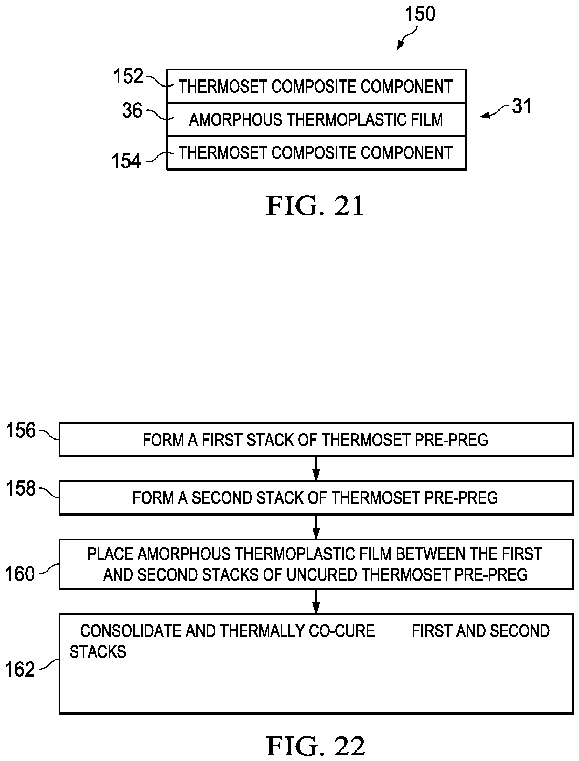

Figure 21 illustrates still another application of the disclosed method, in which an amorphous thermoplastic film 36 is employed to fabricate a thermoset composite structure 150 which may have improved bondline thickness consistency and/or toughness. The amorphous thermoplastic film 36 is used to produce a fused thermoplastic joint 31 between two thermoset composite components 152. The thermoset composite structure 150 may be produced by the method shown in Figure 22. At step 156 at 158, first and second stacks of thermoset pre-preg are respectively formed. At step 160, the amorphous thermoplastic film 36 is placed between joining surfaces of the first and second stacks of uncured thermoset pre-preg. At step 162 the first and second stacks of thermoset pre-preg are consolidated and thermally co-cured, along with the amorphous thermoplastic film. During the cure process, the pre-preg and the film are heated to the cure temperature of the thermoset resin, typically approximately 350°F (176°C) at which point the amorphous thermoplastic film 36 becomes glassy and fuses with the viscous thermoset resin. Consolidating pressure applied by the vacuum bagging or autoclave processing forces the two stacks of thermoset pre-preg against the film 36 to assist in the thermoset resin to-thermoplastic film fusion. Because the amorphous thermoplastic film 36 can be pre-manufactured with a controlled thickness, the fused thermoplastic joint 31 may have a bondline thickness that is both consistent and which may be controlled. The thermoplastic joint 31 may also exhibit improved toughness compared to joints relying on bonding adhesives. Further, the amorphous thermoplastic film 36 may be selected to have a desired hardness which may be less than that of the thermoset composite components 152, 154, allowing the fused thermoplastic joint 31 to better absorb energy due to shock, vibration or impacts experienced by the composite structure. Thus, the thermoset composite structure 150 may exhibit improve impact resistance.

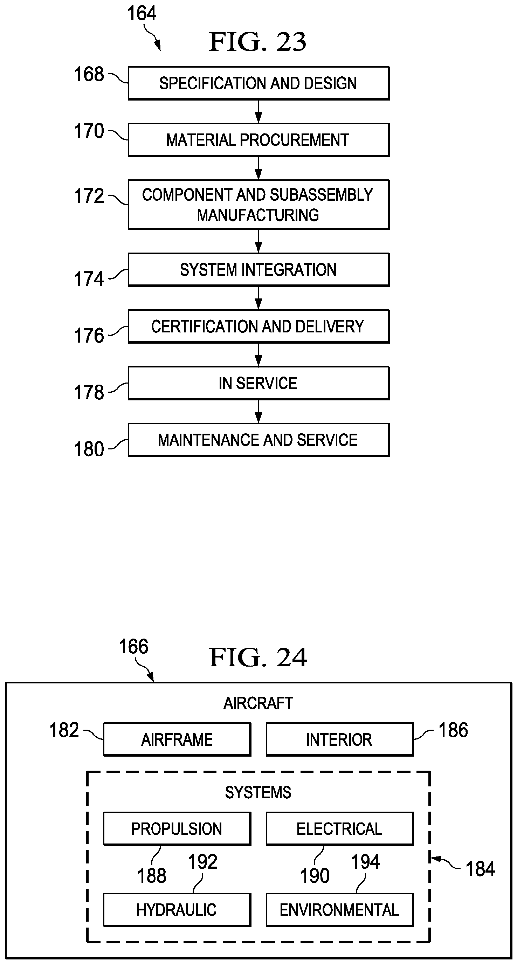

Embodiments of the disclosure may find use in a variety of potential applications, particularly in the transportation industry, including for example, aerospace, marine, automotive applications and other application where composite components are joined together. In the aircraft industry, the disclosed joining method may be used to produce low-cost, high-performance integrated structures such as stiffeners of various cross-sectional shapes, torque boxes used for doors, flight control structures, wing, and fuselage structures. Thus, referring now to Figures 23 and 24, embodiments of the disclosure may be used in the context of an aircraft manufacturing and service method 164 as shown in Figure 23 and an aircraft 166 as shown in Figure 24. During pre-production, exemplary method 164 may include specification and design 168 of the aircraft 166 and material procurement 170. During production, component and subassembly manufacturing 172 and system integration 174 of the aircraft 166 takes place. Thereafter, the aircraft 166 may go through certification and delivery 176 in order to be placed in service 178. While in service by a customer, the aircraft 166 is scheduled for routine maintenance and service 180, which may also include modification, reconfiguration, refurbishment, and so on.

Each of the processes of method 164 may be performed or carried out by a system integrator, a third party, and/or an operator (e.g., a customer). For the purposes of this description, a system integrator may include without limitation any number of aircraft manufacturers and majorsystem subcontractors; a third party may include without limitation any number of vendors, subcontractors, and suppliers; and an operator may be an airline, leasing company, military entity, service organization, and so on.

As shown in Figure 24, the aircraft 166 produced by exemplary method 164 may include an airframe 182 with a plurality of systems 184 and an interior 186. Examples of high-level systems 184 include one or more of a propulsion system 188, an electrical system 190, a hydraulic system 192, and an environmental system 194. Any number of other systems may be included. Although an aerospace example is shown, the principles of the disclosure may be applied to other industries, such as the marine and automotive industries.

Systems and methods embodied herein may be employed during any one or more of the stages of the production and service method 164. For example, components or subassemblies corresponding to production process 172 may be fabricated or manufactured in a manner similar to components or subassemblies produced while the aircraft 166 is in service. Also, one or more apparatus embodiments, method embodiments, or a combination thereof may be utilized during the production stages 172 and 174, for example, by substantially expediting assembly of or reducing the cost of an aircraft 166. Similarly, one or more of apparatus embodiments, method embodiments, or a combination thereof may be utilized while the aircraft 166 is in service, for example and without limitation, to maintenance and service 180.

The description of the different illustrative embodiments has been presented for purposes of illustration and description, and is not intended to be exhaustive or limited to the embodiments in the form disclosed. Many modifications and variations will be apparent to those of ordinary skill in the art. Further, different illustrative embodiments may provide different advantages as compared to other illustrative embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A method of joining two thermoplastic components comprising:
producing (38) a first thermoplastic composite component (32) by placing a first amorphous thermoplastic film (36a) on a first stack of thermoplastic pre-preg (32a), and co-consolidating the first amorphous thermoplastic film and the first stack of thermoplastic pre-preg to provide a layer of the first amorphous thermoplastic film on the first stack of thermoplastic pre-preg;
producing (40) a second thermoplastic composite component by placing a second amorphous thermoplastic film (36b) on a second stack of thermoplastic pre-preg (32a), and co-consolidating the second amorphous thermoplastic film and the second stack of thermoplastic pre-preg to provide a layer of the second amorphous thermoplastic film on the second stack of thermoplastic pre-preg;
assembling (42) the first and second thermoplastic composite components, including placing the first and second amorphous thermoplastic films against each other;
pressing (44) the first and second amorphous thermoplastic films against each other by applying pressure to the first and second thermoplastic composite components; and
fusing (46) the first and second amorphous thermoplastic films together at a temperature below approximately 475°F (246°C) ;
wherein each of the first and second thermoplastic pre-preg is PEEK and each of the first and second amorphous thermoplastic films is PES.

2. The method of claim 1, wherein producing the first thermoplastic composite component includes:
placing the first amorphous thermoplastic film against a joining surface (37) of the first stack of thermoplastic pre-preg, and
co-consolidating the first amorphous thermoplastic film and the first stack of thermoplastic pre-preg includes heating the first stack of thermoplastic pre-preg to the melt temperature of the pre-preg in the first stack thereof and compressing the first stack of thermoplastic pre-preg with the first amorphous thermoplastic film.

3. The method of either Claim 1 or claim 2, wherein co-consolidating the second amorphous thermoplastic film and the second stack of thermoplastic pre-preg includes:
heating the second amorphous thermoplastic film to its glass transition temperature,
heating the second thermoplastic pre-preg to its melt temperature, and
compressing the second stack of thermoplastic pre-preg with the second amorphous thermoplastic film.

4. The method of claim 2, wherein heating the first stack of thermoplastic pre-preg to its melt temperature includes heating the first stack of thermoplastic pre-preg to a temperature greater than approximately 650°F (343°C).

5. The method of any preceding Claim, wherein each of the first and second amorphous thermoplastic films has a thickness between approximately 5 mm and 7 mm.

6. An integrated thermoplastic structure having thermoplastic components joined by the method of any preceding Claim.

## Patentansprüche

1. Verfahren zum Zusammenfügen von zwei thermoplastischen Komponenten, das aufweist:
Herstellen (38) einer ersten thermoplastischen Verbundkomponente (32) durch Platzieren einer ersten amorphen thermoplastischen Folie (36a) auf einem ersten Stapel eines thermoplastischen Prepregs (32a), und miteinander Konsolidieren der ersten amorphen thermoplastischen Folie und des ersten Stapels des thermoplastischen Prepregs, um eine Schicht der ersten amorphen thermoplastischen Folie auf dem ersten Stapel des thermoplastischen Prepregs bereitzustellen;
Herstellen (40) einer zweiten thermoplastischen Verbundkomponente durch Platzieren einer zweiten amorphen thermoplastischen Folie (36b) auf einem zweiten Stapel des thermoplastischen Prepregs (32a) und miteinander Konsolidieren der zweiten amorphen thermoplastischen Folie und des zweiten Stapels des thermoplastischen Prepregs, um eine Schicht der zweiten amorphen thermoplastischen Folie auf dem zweiten Stapel des thermoplastischen Prepregs bereitzustellen;
Zusammensetzen (42) der ersten und der zweiten thermoplastischen Verbundkomponente, einschließlich Platzieren der ersten und der zweiten amorphen thermoplastischen Folie gegeneinander;
Pressen (44) der ersten und der zweiten amorphen thermoplastischen Folie gegeneinander durch Aufbringen eines Drucks auf die erste und die zweite thermoplastische Verbundkomponente; und
Zusammenschmelzen (46) der ersten und der zweiten amorphen thermoplastischen Folie bei einer Temperatur unter ca. 246°C;
wobei jedes des ersten und des zweiten thermoplastischen Prepregs PEEK ist und jede der ersten und der zweiten amorphen thermoplastischen Folie PES ist.

2. Verfahren nach Anspruch 1, wobei das Herstellen der ersten thermoplastischen Verbundkomponente aufweist:
Platzieren der ersten amorphen thermoplastischen Folie gegen eine Zusammenfügungsfläche (37) des ersten Stapels des thermoplastischen Prepregs, und
das miteinander Konsolidieren der ersten amorphen thermoplastischen Folie und des ersten Stapels des thermoplastischen Prepregs das Erhitzen des ersten Stapels des thermoplastischen Prepregs auf die Schmelztemperatur des Prepregs in dem ersten Stapel aufweist und das Komprimieren des ersten Stapels des thermoplastischen Prepregs mit der ersten amorphen thermoplastischen Folie.

3. Verfahren nach Anspruch 1 oder Anspruch 2, wobei das miteinander Konsolidieren der zweiten amorphen thermoplastischen Folie und des zweiten Stapels des thermoplastischen Prepregs aufweist:
Erhitzen der zweiten amorphen thermoplastischen Folie auf ihre Glasübergangstemperatur,
Erhitzen des zweiten thermoplastischen Prepregs auf seine Schmelztemperatur, und
Komprimieren des zweiten Stapels des thermoplastischen Prepregs mit der zweiten amorphen thermoplastischen Folie.

4. Verfahren nach Anspruch 2, wobei das Erhitzen des ersten Stapels des thermoplastischen Prepregs auf seine Schmelztemperatur das Erhitzen des ersten Stapels des thermoplastischen Prepregs auf eine Temperatur über ca. 343°C aufweist.

5. Verfahren nach einem der vorhergehenden Ansprüche, wobei jede der ersten und der zweiten amorphen thermoplastischen Folie eine Stärke zwischen ca. 5 mm und 7 mm hat.

6. Integrierte thermoplastische Struktur, die thermoplastische Komponenten hat, welche durch das Verfahren nach einem der vorhergehenden Ansprüche zusammengefügt sind.

## Revendications

1. Procédé destiné à relier deux composants thermoplastiques, comprenant :
la production (38) d'un premier composant composite thermoplastique (32) en plaçant un premier film thermoplastique amorphe (36a) sur une première pile de préimprégné thermoplastique (32a), et en co-consolidant le premier film thermoplastique amorphe et la première pile de préimprégné thermoplastique afin de fournir une couche du premier film thermoplastique amorphe sur la première pile de préimprégné thermoplastique ;
la production (40) d'un second composant composite thermoplastique en plaçant un second film thermoplastique amorphe (36b) sur une seconde pile de préimprégné thermoplastique (32a), et en co-consolidant le second film thermoplastique amorphe et la seconde pile de préimprégné thermoplastique afin de fournir une couche du second film thermoplastique amorphe sur la seconde pile de préimprégné thermoplastique ;
l'assemblage (42) des premier et second composants composites thermoplastiques, incluant le placement des premier et second films thermoplastiques amorphes l'un contre l'autre ;
le pressage (44) des premier et second films thermoplastiques amorphes l'un contre l'autre en appliquant une pression sur les premier et second composants composites thermoplastiques ; et
la fusion (46) des premier et second films thermoplastiques amorphes ensemble à une température inférieure à environ 475° F (246°C) ;
dans lequel chacun des premier et second préimprégnés thermoplastiques est en PEEK et chacun des premier et second films thermoplastiques amorphes est en PES.

2. Procédé selon la revendication 1, dans lequel la production du premier composant composite thermoplastique comporte :
le placement du premier film thermoplastique amorphe contre une surface de liaison (37) de la première pile de préimprégné thermoplastique, et
la co-consolidation du premier film thermoplastique amorphe et de la première pile de préimprégné thermoplastique comporte le chauffage de la première pile de préimprégné thermoplastique à la température de fusion du préimprégné dans la première pile de celui-ci et la compression de la première pile de préimprégné thermoplastique avec le premier film thermoplastique amorphe.

3. Procédé selon la revendication 1 ou la revendication 2, dans lequel la co-consolidation du second film thermoplastique amorphe et de la seconde pile de préimprégné thermoplastique comporte :
le chauffage du second film thermoplastique amorphe à sa température de transition vitreuse,
le chauffage du second préimprégné thermoplastique à sa température de fusion, et
la compression de la seconde pile de préimprégné thermoplastique avec le second film thermoplastique amorphe.

4. Procédé selon la revendication 2, dans lequel le chauffage de la première pile de préimprégné thermoplastique à sa température de fusion comporte le chauffage de la première pile de préimprégné thermoplastique à une température supérieure à environ 650°F (343°C).

5. Procédé selon une quelconque revendication précédente, dans lequel chacun des premier et second films thermoplastiques amorphes présente une épaisseur entre environ 5 mm et 7 mm.

6. Structure thermoplastique intégrée présentant des composants thermoplastiques reliés par le procédé selon une quelconque revendication précédente.
